# EUROPEAN PATENT APPLICATION

(11) **EP 4 485 349 A1**
(43) Date of publication of application: **01.01.2025**
(21) Application number: 23182334.5
(22) Date of filing: 29.06.2023
(51) Int. Cl.: G06T 7/00

(54) **ANATOMICAL CONTOURING**

(71) Applicant: Koninklijke Philips N.V., 5656 AG Eindhoven (NL)
(72) Inventor: PAPACONSTADOPOULOS, Pavlos, Eindhoven (NL); KLAASSEN, Remy, Eindhoven (NL); HEIJMAN, Edwin, 5656AG Eindhoven (NL)
(74) Representative: Philips Intellectual Property & Standards

(57) **Abstract**

Proposed concepts thus aim to provide schemes, solutions, concept, designs, methods and systems pertaining to prioritizing medical images for anatomical contouring. In particular, embodiments aim to provide a method for prioritizing medical images for anatomical contouring by processing a plurality of medical images in order to generate at least one visual characteristic value for each respective image. The visual characteristic value for each image is based, in part, on obtained boundary data describing a region of at least one of the images, such as an unfinished contour line. A priority image can then be determined based on the plurality of visual characteristic values.

## Description

### FIELD OF THE INVENTION

This invention relates to the field of medical images for anatomical contouring, and in particular, to the field of prioritizing medical images for anatomical contouring.

### BACKGROUND OF THE INVENTION

During clinical pre-treatment phases in Oncology, a clinical expert (e.g., a radiologist, interventional radiologist, medical or radiation oncologist) typically utilizes patient medical image scans to localize and delineate the tumour(s). Such activity traditionally occurs with the aid of an electronic contouring tool and is often described as contouring (or delineation). This process is of utmost critical nature as it is the starting point of identifying which area of the body needs to be targeted for biopsy or removed, ablated, or irradiated depending on the choice of treatment.

The contouring tool is often an electronic paint brush or pen which allows the clinician to directly draw the tumour in 3D image space, slice-by-slice. The most common data format for storing the contours are DICOM files, similarly to medical images. The contours are saved as a series of (x, y, z) coordinates in the DICOM file, following the coordinate system of the reference image. During the activity of contouring the clinician essentially defines the boundary that separates the tumor to the healthy tissue. Such boundaries can typically be depicted visually as a contrast differentiation level between the different anatomical regions.

An ideal image modality would offer 100 % contrast differentiation between healthy tissue and cancer, making contouring much easier. However, no image modality is perfect. Different imaging modalities may offer optimum contrast differentiation in some clinical settings or tissue characteristics but not in others.

Historically, a single image modality, i.e. Computed Tomography (CT), is chosen for scanning the patient and performing the delineation. However, in recent years the role and importance of multi-modality imaging has been elevated. The principal reasons behind this shift is the greater accessibility of various image modalities within a hospital as well as the appreciation that different image modalities offer complementary information to each other and should be used for tumour delineation. A good example of such a situation is prostate cancer: multi-parametric MRI (mpMRI) is considered broadly now as the standard of care for prostate cancer diagnosis. International guidelines (e.g. PI-RADS) require that various mpMRI image sequences (e.g. T2w, DWI, DCE) are reviewed in order to identify the intra-prostatic tumour lesions. In addition, PSMA PET/CT is considered superior for Lymph Node (LN) involvement assessment for prostate cancer. As Spectral CT is also evolving, it will offer complementary information in both the primary tumour and LN assessment, via even more multi-dimensional information (e.g. Z-effective maps, Iodine maps or various virtual monoenergetic beams). In current practice, but also in future, it can only be expected that the utility of multimodality imaging will be even further enhanced.

The situation described above demonstrates that there is already a vast and diverse range of image modalities that the physician needs to consult during contouring. However, the tools via which the physician delineates/contours have not changed. Typically, an electronic contour brush/pen is still used on a single image modality, slice-by-slice, to delineate the boundary between tumour and healthy tissue. Clinicians may indeed use some image fusion and toggle between 1 or 2 image modalities, or even consult another image modality on another screen at the same time to enrich their decision making, but the approach is mostly empirical and ad-hoc. The problem is that clinicians struggle in interpreting and utilizing multi-dimensional data in an effective way as it goes beyond the natural human experience. The rise of multimodality imaging for tumor delineation is an issue for clinicians as they need to understand which modalities to use and how to use them to accurately contour the tumour. Even though efforts have been made in standardizing the preferred image sequences per clinical site, there is surprisingly little development in advanced tools that physicians can use for this purpose.

### SUMMARY OF THE INVENTION

The invention is defined by the claims.

According to examples in accordance with an aspect of the invention, there is provided a method for prioritizing medical images for anatomical contouring.
The method comprises: obtaining a plurality of medical images including the same anatomical region, each medical image being captured using a different imaging modality or imaging sequence; obtaining boundary data describing a region of at least one of the plurality of medical images; processing each of the plurality of medical images based on the boundary data to generate at least one visual characteristic for each respective medical image; and determining a priority image of the plurality of medical images based on the generated plurality of visual characteristic values.

Proposed concepts thus aim to provide schemes, solutions, concepts, designs, methods and systems pertaining to prioritizing medical images for anatomical contouring. In particular, embodiments aim to provide a method for prioritizing medical images for anatomical contouring by processing a plurality of medical images in order to generate at least one visual characteristic value for each respective image. The visual characteristic value for each image is based, in part, on obtained boundary data describing a region of at least one of the images, such as an unfinished contour line. A priority image can then be determined based on the plurality of visual characteristic values.

In other words, it is proposed that by processing each of a plurality of medical images, each image being captured using a different imaging modality or imaging sequence, a visual characteristic value, such as contrast, can be generated for each image. Furthermore, this visual characteristic value is based on boundary data, e.g., the area around an already-begun contour line. Thus, for example, each medical image can be processed to generate a contrast value for either side of the already-begun contour line, and the image with the highest value can be determined as the priority image. A medical image with the highest differentiation between whatever anatomical region is trying to be contoured and the surrounding tissue is typically the image with which it will be the easiest for the clinician to contour.

By obtaining boundary data describing a region of at least one of the medical images, the visual characteristic value can be made more specific and/or more useful. For instance, rather than generating a dynamic range value for the overall medical image, a dynamic range value can be generated for only a region of interest in a medical image. The prioritizing of the images can thus be made more effective, prioritizing the image that will be most useful for contouring within or around a region of interest. For example, one medical image may have the largest dynamic range value for the whole image, but a different image may have a larger dynamic range value within the region that the clinician is specifically interested in; thus, the second image would be a more useful priority image for the clinician.

In a simple example, four medical images are obtained, all including a tumour in a subject's stomach. One is a conventional CT image; one, a Z-effective image; one, a monoenergetic 40KeV; and one, an MRI image. A clinician has already begun contouring the tumour using the conventional CT image, and the unfinished contour line is taken as the boundary data of the conventional CT image. Each image is then processed to generate a sharpness value for a region around the unfinished contour line. The image with the highest sharpness value is then determined as the priority image.

A different imaging modality refers to the use of a different image scanner, such as a CT or an MRI scanner, while a different image sequence refers to different scanning protocols used by the same scanner, such as different MRI sequences. Essentially, the method requires that each image is thus captured with either a unique imaging apparatus, or with the same apparatus as another image but with unique capture parameters / scanning protocols. In this way, it is ensured that each image is unique and can thus provide a variety of visual characteristic values, which may be useful in different circumstances. Of course, the method would not make sense if all the images were the same, having been captured with the same apparatus and exactly the same capture parameters.

The inventors have realised that by analysing a number of medical images of the same anatomical region, an image most useful for contouring can be determined, i.e., a priority image, and this can be based on generated visual characteristic values for each image, such as contrast or brightness. Accordingly, the current invention is expected to aid a physician/clinician in effective use of multimodality/multidimensional data in a more efficient way for the purpose of delineating an anatomical structure such as a tumour or organ.

Ultimately, an improved method for prioritizing medical images for anatomical contouring is provided.

In some embodiments, a visual characteristic may comprise at least one of: contrast; sharpness; tone; gamma; texture; dynamic range; colour; saturation; and white balance. These visual characteristics can be used to characterize each medical image, especially when taking into account a specific region of each image, such as a contour line or a region of interest. For example, these values can be used to help determine which medical image has the most differentiation between each side of an unfinished contour line, for example, between a tumour and healthy tissue. For example, the contrast between the inside and the outside of the region can be used to determine the priority image, i.e., the medical image with the largest contrast value can be determined as the priority image as this image may allow a clinician to more easily delineate the boundary between a tumour and healthy tissue. Contrast may be defined as the ratio between inner-region pixel values and outer-region pixel values, and so this ratio may be used to help determine the priority image, for instance, by choosing the medical image with the largest ratio. Alternatively, or in addition, other visual characteristics may also be used to help determine the priority image, for example, taking into account each image's dynamic range, saturation, or sharpness, etc.

In some embodiments, an imaging modality or imaging sequence may comprise at least one of: conventional CT imaging; spectral CT imaging; monoenergetic CT imaging; iodine density imaging; Z-effective imaging; x-ray imaging; MRI imaging; multi-parametric MRI imaging; and PSMA PET/CT imaging. These are imaging modalities/sequences that are currently commonly used in anatomical contouring. Z-effective imaging may also be understood as electron density imaging.

In some embodiments, obtaining boundary data may comprise analysing at least one of the plurality of medical images to generate boundary data describing a region for the at least one image respectively. This facilitates the automatic generation of boundary data for a medical image, i.e., the boundary data does not need to be obtained from an external source, such as user-generated boundary data, e.g., a clinician-drawn contour line. For instance, a medical image may be analysed to identify an object of interest, such as a tumour, and then boundary data can be generated describing a region including the tumour and some healthy tissue around it.

In some embodiments, the region may describe a boundary. A boundary may also be understood as a contour line or a delineating line. A visual characteristic value of the boundary/contour line may then be, for example, a contrast value between pixels on either side of the boundary/contour line.

In some embodiments, the boundary comprises a boundary generated by a user. This allows the user to start a delineating/contouring line around an object-of-interest (e.g., an anatomical structure), and the method may then aid the user in completing the contouring of the object by determining a priority image which may make completing the boundary easier.

In some embodiments, the visual characteristic value may comprise a contrast value between pixels on either side of the boundary. This visual characteristic value has been found to be beneficial in identifying an optimal image for anatomical contouring.

In some embodiments, the boundary may comprise an open boundary. An open boundary can be understood as a contour line in which the ends do not connect. This is in contrast to a closed boundary, which is a contour line in which both ends connect. For example, an open boundary may be a contour line drawn by a clinician midway through drawing a closed boundary, e.g., completing their contour of a tumour or organ. The determining of a priority image can thus aid them in finishing their boundary/contour line.

In some embodiments, processing each of the plurality of medical images may comprise: generating corresponding boundary data for each of the remaining plurality of medical images describing corresponding regions in each of the remaining plurality of medical images respectively; and processing each of the plurality of medical images based on their corresponding boundary data respectively to generate at least one visual characteristic value for each respective medical image.

This allows the generation of boundary data customized to each medical image, so that the comparing of visual characteristic values may be made more efficient, accurate and/or reliable. For instance, if the plurality of medical images are not exactly aligned, the boundary data for each image may be adjusted so that they are aligned across the medical images. In other words, if the boundary of the edge of a tumour, e.g. an unfinished contour line, is in different locations across the different medical images, the boundary data may adjusted to shift the boundary in each image to ensure that the boundary is at the edge of the tumour in each image.

In some embodiments, the method may further comprise generating a signal for informing a user that the priority image is a different image to a medical image the user is currently viewing. This facilitates the user being informed that they are not looking at the image which has been deemed the most optimal for anatomical contouring. For example, the signal may comprise a pop-up window with the priority image inside. The user may then switch image if they wish.

In some embodiments, the method may further comprise outputting the generated signal.

In some embodiments, the generated signal may comprise a signal configured to make an input device vibrate. This allows a user to be informed that they are not looking at the priority image without interrupting the visuals that they are currently looking at and/or interacting with. The input device may, for example, be a smart pen, smart brush, or mouse which includes an electromechanical vibration system to enable vibration.

In some embodiments, the method may further comprise, in response to receiving an acceptance signal from a user, outputting the priority image on at least one display device. This allows the user to easily switch to the priority image. For example, if the user is informed of the priority image through a pop-up window, the acceptance signal may be to click on the window. The priority image can then be made full-screen, for instance, to allow the user to continue contouring. If the user was informed through a vibrating input device, the acceptance signal could be, for example, to click a certain button on the input device.

In some embodiments, the method may further comprise outputting the priority image on at least one display device. A user may then be able to see the priority image and continue contouring with it.

In some embodiments, outputting the priority image may comprise outputting a semitransparent overlay of the priority image on the display device. In this way, the user may continue contouring on their image of choice whilst still being able to see and benefit from the priority image.

In some embodiments, determining a priority image of the plurality of medical images may comprise processing the generated plurality of visual characteristic values with an algorithm configured to determine a priority image based on the plurality of visual characteristic values.

In some embodiments, the algorithm may be a machine-learning algorithm trained to determine a priority image for a plurality of visual characteristic values.

In some embodiments, the method may further comprise obtaining an identity of a user, and wherein determining a priority image of the plurality of medical images is further based on the identity of the user. In this way, the method may be personalized to a user, who may, for example, have a personal preference for images of one imaging modality or sequence over another. In some embodiments, the algorithm may be configured to determine a priority image further based on the identity of the user.

According to another aspect of the invention, there is provided a computer program comprising code means for implementing the method of any herein disclosed method when said program is run on a processing system.

According to another aspect of the invention, there is provided a system for prioritizing medical images for anatomical contouring. The system comprising an input interface configured to: obtain a plurality of medical images including the same anatomical region, each medical image being captured using a different imaging modality or imaging sequence; obtain boundary data describing a region of at least one of the plurality of medical images; and a processor arrangement configured to: process each of the plurality of medical images based on the boundary data to generate at least one visual characteristic value for each respective medical image; and determine a priority image of the plurality of medical images based on the generated plurality of visual characteristic values.

Thus, there may be proposed concepts for prioritizing medical images for anatomical contouring, and this may be done based on processing a plurality of medical to generate at least one visual characteristic value for each respective image.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for prioritizing medical images for anatomical contouring according to a proposed embodiment;
Fig. 2A is a diagram showing a simplified medical image including an anatomical structure and an open boundary;
Fig. 2B is a diagram showing a simplified medical image including an anatomical structure and a closed boundary;
Fig. 2C is a diagram showing a simplified medical image including part of an anatomical structure and regions either side of an open boundary;
Fig. 2D is a diagram showing a simplified medical image including part of an anatomical structure and a region around an open boundary;
Fig. 3 is a more in-depth flow diagram of a method for prioritizing medical images for anatomical contouring according to a proposed embodiment;
Fig. 4 is a simplified block diagram of a system for prioritizing medical images for anatomical contouring according to a proposed embodiment; and
Fig. 5 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to prioritizing medical images for anatomical contouring. According to proposed concepts, a number of possible solutions may be implemented separately or jointly. That is, although these possible solutions may be described below separately, two or more of these possible solutions may be implemented in one combination or another.

Embodiments of the invention aim to provide a method for prioritizing medical images for anatomical contouring. This can be achieved by processing each medical image based on boundary data describing a region to generate at least one visual characteristic value for each respective image. A priority image can thus be determined based on the visual characteristic values.

Proposed concepts thus aim to provide schemes, solutions, concepts, designs, methods and systems pertaining to prioritizing medical images for anatomical contouring. In particular, embodiments aim to provide a method for prioritizing medical images for anatomical contouring by processing a plurality of medical images in order to generate at least one visual characteristic value for each respective image. The visual characteristic value for each image is based, in part, on obtained boundary data describing a region of at least one of the images, such as an unfinished contour line. A priority image can then be determined based on the plurality of visual characteristic values.

In other words, it is proposed that by processing each of a plurality of medical images, each image being captured using a different imaging modality or imaging sequence, a visual characteristic value, such as contrast, can be generated for each image. Furthermore, this visual characteristic value is based on boundary data, e.g., the area around an already-begun contour line. Thus, for example, each medical image can be processed to generate a contrast value for either side of the already-begun contour line, and the image with the highest value can be determined as the priority image. A medical image with the highest differentiation between whatever anatomical region is trying to be contoured and the surrounding tissue is typically the image with which it will be the easiest for the clinician to contour.

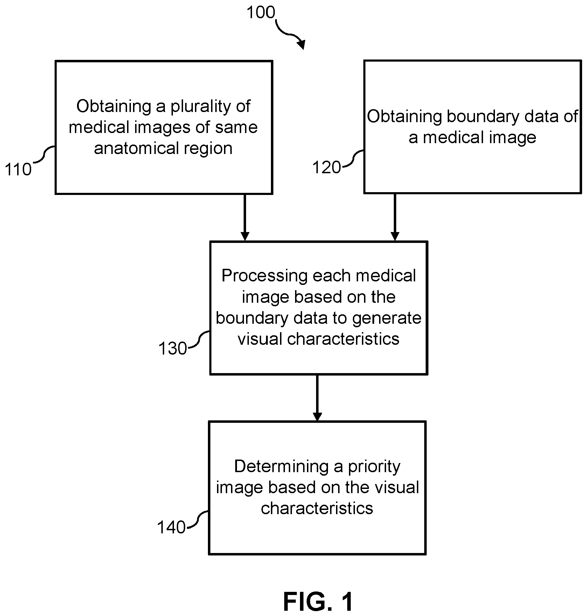

Referring now to Fig. 1, there is depicted a simplified flow diagram of a method 100 for prioritizing medical images for anatomical contouring according to a proposed embodiment.

The method 100 begins with the step 110 of obtaining a plurality of medical images including the same anatomical region, each medical image being captured using a different imaging modality or imaging sequence. A different imaging modality refers to the use of a different image scanner, such as a CT or an MRI scanner, to capture the image while a different imaging sequence refers to using different scanning protocols with the same scanner, such as different MRI sequences. Essentially, what is important is that each image is unique with respect to the other medical images; that means each image is captured either with a unique imaging apparatus, or with the same apparatus as another image but with unique capture parameters / scanning protocols. In this way, it is ensured that each image is unique and thus can provide a variety of visual characteristic values, which may be useful in different circumstances. Of course, the method would not make sense if all the images were identical, having been captured with the same apparatus and exactly the same capture parameters, as a priority image would thus be meaningless. Each medical image must include the same anatomical region, however, to allow a meaningful comparison between the images and to allow anatomical contouring of the same region in each image.

Each medical image being captured using a different imaging modality or imaging sequence may thus be understood as each medical image being captured with at least one unique capture parameter, with respect to the other medical images. A capture parameter may comprise: an image scanner used to capture the image; a scanning protocol used to capture the image; and/or a scan parameter such as energy, time, or resolution, etc.

In some embodiments, an imaging modality or imaging sequence may comprise at least one of: conventional CT imaging; spectral CT imaging; monoenergetic CT imaging; iodine density imaging; Z-effective imaging; x-ray imaging; MRI imaging; multi-parametric MRI imaging; and PSMA PET/CT imaging. These are imaging modalities/sequences that are currently commonly used in anatomical contouring. In the embodiment of method 100, the plurality of medical images comprises one image of each of the above-mentioned different imaging modality/sequences.

In step 120, boundary data is obtained describing a region of at least one of the plurality of medical images. The described region, for example, could comprise a region around an open boundary, i.e., an unfinished contour line; a region within a closed boundary, i.e., a finished and self-connecting contour line; or two regions either side of a boundary. In some embodiments, the region may comprise the entire medical image.

In this embodiment, the region describes an open boundary generated by a user. In other embodiments, the region may describe a closed boundary generated by a user, an open boundary automatically generated, or a closed boundary automatically generated. In other words, in this embodiment the region describes an unfinished contour line drawn by a user/clinician.

A boundary may also be understood as a contour line. A visual characteristic value of the boundary/contour line may then, for example, be a contrast value between pixels on either side of the boundary/contour line. Further, by having the boundary generated by a user, this allows the user to start a delineating/contouring line around an object-of-interest, such as a tumour or organ. The method 100 may then aid the user in completing the contouring of the object by determining a priority image which may make completing the boundary easier.

An open boundary can be understood as a contour line in which the ends do not connect. This is in contrast to a closed boundary, which is a contour line in which both ends connect. For example, an open boundary may be a contour line drawn by a clinician midway through drawing a closed boundary, e.g., completing their contour of a tumour or organ. The determining of a priority image can thus aid them in finishing their boundary/contour line.

For example, in some embodiments, boundary data may comprise a set of coordinates of a contour line in the corresponding medical image.

In step 130, each of the plurality of medical images are processed based on the boundary data to generate at least one visual characteristic value for each respective medical image. Basing the visual characteristic value(s) of each medical image on the boundary data, allows for the visual characteristic values to describe only the region within each medical image, rather than the entire image which may include regions not of interest to a clinician/user. The prioritization may thus be made more efficient, effective, accurate and/or reliable by allowing the images to be prioritized based on visual characteristic values for only the region of interest, e.g., the region in which the contouring is taking place. For example, in some embodiments in which the region is a boundary/contour line, processing the images based on the boundary data may comprise processing a local neighbourhood around the boundary, rather than the entire image.

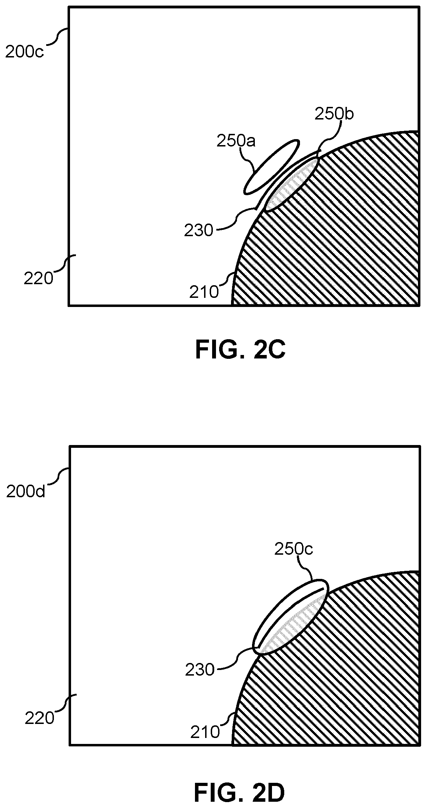

In this embodiment, the visual characteristic value comprises a contrast value between pixels on either side of the boundary. This visual characteristic value has been found to be beneficial in identifying an optimal image for anatomical contouring. How this may be generated will be clarified in Fig. 2C.

However, in other embodiments, a visual characteristic may comprise at least one of: contrast; sharpness; tone; gamma; texture; dynamic range; colour; saturation; and white balance. These visual characteristics can be used to characterize each medical image, especially when taking into account a specific region of each image, such as a contour line or a region of interest. For example, these values can be used to help determine which medical image has the most differentiation between each side of an unfinished contour line between a tumour and healthy tissue. For example, the contrast between the inside and the outside of the region can be used to determine the priority image, i.e., the medical image with the largest contrast value can be determined as the priority image as this image may allow a clinician to more easily delineate the boundary between a tumour and healthy tissue. Contrast may be defined as the ratio between inner-region pixel values and outer-region pixel values, and so this ratio may be used to help determine the priority image, for instance, by choosing the medical image with the largest ratio. Alternatively, or in addition, other visual characteristics may also be used to help determine the priority image, for example, taking into account each image's dynamic range, saturation, or sharpness, etc.

In some embodiments, a visual characteristic value may comprise a visual characteristic feature map for each medical image. The feature map describes visual characteristic values either for each entire medical image or for regions within each medical image based on the boundary data, e.g., a region around an open boundary.

In step 140, a priority image of the plurality of medical images is determined based on the generated plurality of visual characteristic values. This may simply comprise choosing the medical image with the highest/lowest respective visual characteristic value or sum of values (if more than one has been generated for each image). In other embodiments, however, step 140 may comprise processing the generated plurality of visual characteristic values with an algorithm configured to determine a priority image based on the plurality of visual characteristic values. For example, the algorithm may take into account multiple visual characteristic values for each image and determine a priority image based on which image is the priority image based on the most visual characteristic values. In other embodiments, the algorithm may weight different visual characteristic values differently, and place more importance on some values than others. For instance, if one image has a high contrast but a low brightness, and another image has a high brightness but a low contrast, the algorithm may weight contrast more than brightness and so still determine the first image as the priority image despite its low brightness. In some embodiments, the algorithm may be a machine-learning algorithm trained to determine a priority image for a plurality of visual characteristic values. For instance, the machine-learning algorithm may be a CNN or a random forest classifier.

In some embodiments, the method 100 may further comprise obtaining an identity of a user in a step not shown. Determining the priority image of the plurality of medical images in step 140 can then further be based on the identity of the user. In this way, the method may be personalized to a user, who may, for example, have a personal preference for images of one imaging modality or sequence over another. In some embodiments, the algorithm may be configured to determine a priority image further based on the identity of the user.

In some embodiments, the method 100 may further comprise outputting the priority image on at least one display device. A user may then be able to see the priority image and continue contouring with it. In some embodiments, outputting the priority image may comprise outputting a semitransparent overlay of the priority image on the display device. In this way, the user can continue contouring on their image of choice whilst still being able to see and benefit from the priority image.

In an example situation, a spectral CT scan for a prostate patient is obtained. The spectral CT scan comprises four image sequences: conventional CT; Z-effective; monoenergetic 40KeV; and Iodine density overlay. A clinician begins to contour a tumour within the prostrate on the conventional CT image, also referred to as an intra-prostatic lesion. The clinician's initial contour line is then taken as the boundary data describing an open boundary. Contrast values are then generated for either side of the boundary line in each medical image, e.g., a ratio of pixel values on either side of the boundary. The mono-energetic 40KeV is then determined to be the priority image due to it having the largest contrast values. The clinician is then informed that the priority image is not the conventional CT image they are currently contouring with. The clinician then switches to the monoenergetic 40KeV image and continues contouring. After finishing contouring one region, i.e., completing a closed boundary, the clinician then moves to a new region in the monoenergetic 40KeV image and continues contouring. The new contour line is then taken as new boundary data and the method repeated which may result in a new priority image being determined, based solely on the new boundary data or in combination with the old boundary data. In other words, the priority image can be updated as a user moves to contouring other anatomical regions within the medical images.

In some embodiments, step 140 comprises not only determining a priority image but determining a priority list, ranking each of the medical images based on their respective visual characteristic values. In these embodiments, the priority list may optionally be output to the user such that they may select one of the images for viewing.

In some embodiments, the priority image may be a composite 3D image composed of a plurality of priority images for different regions respectively. For instance, in a simple example, if one medical image is determined to be the priority image for the left half of the medical image, but another image is determined to be the priority image for the right half of the medical image, then a composite 3D priority image may be determined composed of different respective left and right halves.

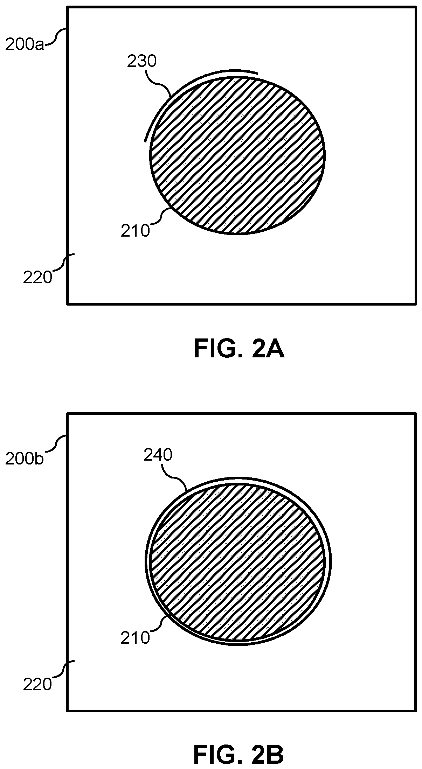

Referring now to Fig. 2A, there is depicted a diagram showing a simplified medical image 200a including an anatomical structure 210 and an open boundary 230. This is a simplified example of how an open boundary (i.e., an unfinished contour line) drawn by a user on a medical image 200a could look. For instance, the user is trying to draw a contour line 230 at the edge of the anatomical structure 210, which could be, for example a tumour or organ, where it meets healthy/surrounding tissue 220. Depending on the visual characteristics of the medical image 200a, especially at the edges of the anatomical structure, this may be difficult to do.

Referring now to Fig. 2B, there is depicted a diagram showing a simplified medical image 200b including an anatomical structure 210 and a closed boundary 240. This is a simplified example how a closed boundary (i.e. a finished contour line) drawn by a user, or automatically generated, could look. For instance, this contour / delineating line clearly delineates between the anatomical structure 210, which could be a tumour or organ, for example, and healthy tissue 220. This is what a clinician is hoping to achieve with anatomical contouring.

Referring now to Fig. 2C, there is depicted a diagram showing a simplified medical image 200c including part of an anatomical structure 210 and regions, 250a and 250b, either side of an open boundary 230. In this case, the region that the obtained boundary data in step 120 of method 100 is describing is an open boundary 230 generated by a user, further comprising two regions, 250a and 250b, either side of the open boundary 230. The region of method 100 may thus be understood as comprising the open boundary 230 and the regions, 250a and 250b, either side of it. The visual characteristic value generated for each medical image 200c in step 130 of method 100 may then be a contrast value between pixels on either side of the boundary 230. In other words, a contrast value may be determined between pixels in region 250a and pixels in region 250b. This may be done by taking an average of the pixel values in region 250a and the pixel values in 250b respectively, and then taking the ratio of average pixel value in region 250b and the average pixel value in region 250a to determine the contrast value. The medical image 200c with the highest contrast value can then be determined as the priority image in step 140 of method 100 as this image is likely to be the image with the clearest differentiation between the anatomical structure 210 and the healthy tissue 220, and therefore the easiest for the user to contour with.

In other embodiments, the contrast value between the regions, 250a and 250b, may be determined by taking a ratio of the highest and lowest pixel vales in each region respectively. In other embodiments, the contrast value between the regions, 250a and 250b, may be determined in any suitable way.

Referring now to Fig. 2D, there is depicted a diagram showing a simplified medical image 200d including part of an anatomical structure 210 and a region 250c around an open boundary 230. In some embodiments, a visual characteristic value generated for each respective medical image 200d may be at least one of: the contrast; sharpness; tone; gamma; texture; dynamic range; colour; saturation; and white balance within the region 250c. The priority image can thus be determined based on one or more of these factors such that the priority image may therefore be the image in which continuing the boundary 230 (contour line) is made easiest. This may be, for example, the medical image 200d in which the region 250c is brightest, sharpest, most saturated, has a beneficial tone, has the most contrast, has the largest dynamic range, has a beneficial texture, has a particular colour, and/or has a beneficial white balance, etc. In some embodiments, a particular combination of visual characteristic values may be used to determine a priority image, for instance, high contrast with low saturation, or high dynamic range with a particular texture. In other embodiments, this same approach may be used even where the boundary 230 is a closed boundary, such as boundary 240 of Fig. 2B. In these cases, the region 250c may visualised as a thick band or ring following the edges of the anatomical structure 210, containing pixels both of the anatomical structure 210 and of the healthy tissue 220.

Note that the distances between the boundaries, 230 and 240, in Figs. 2A-2D, and the anatomical structures 210 are not representative of how close the contour line would be to the structures in reality. Ideally, there would be no gap between the boundaries, 230 and 240, and the edges of the anatomical structures 210, such that the boundaries would exactly match and follow the edge of the anatomical structures 210.

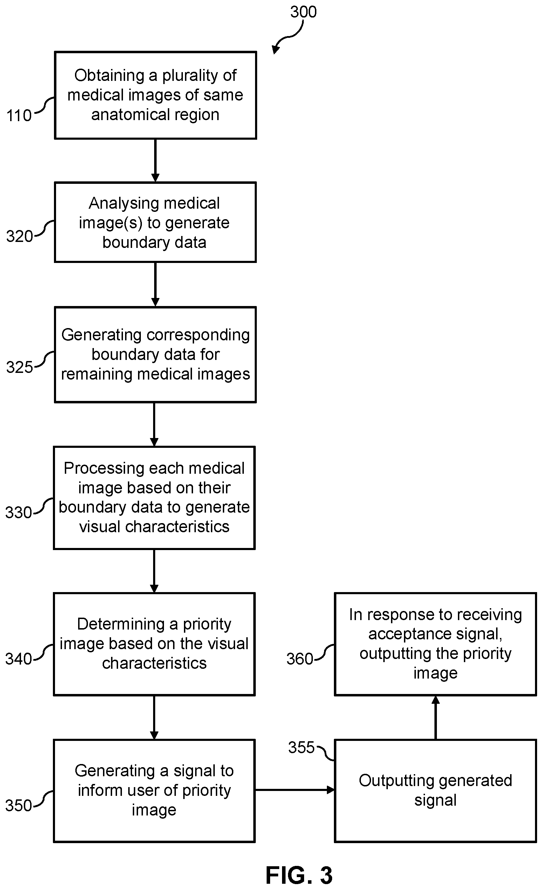

Referring now to Fig. 3, there is depicted a more in-depth flow diagram of a method 300 for prioritizing medical images for anatomical contouring according to a proposed embodiment.

Step 110 is substantially the same as has been described in relation to the method 100 in Fig. 1.

In step 320, at least one of the plurality of medical images is analysed to generate boundary data describing a region for the at least one image respectively. This facilitates the automatic generation of boundary data for a medical image, i.e., the boundary data does not need to be obtained from an external source, such as user-generated boundary data, e.g., a clinician-drawn contour line. For instance, a medical image may be analysed to identify an object of interest, such as a tumour, and then boundary data can be generated describing, for example, a region including the tumour and some healthy tissue around it. In this embodiment, only one of the plurality of medical images is analysed to generate boundary data describing a region for the at least one image respectively. In this embodiment, the region is a closed boundary, such as that in Fig. 2B, encircling an anatomical structure. In other embodiments, however, the region may be an open boundary.

Essentially in step 320, an automatic contouring of one or more medical images is attempted, generating boundary data for one or more medical images respectively. This automatic contour line, i.e., the automatically generated boundary data describing a region, may then be used as the basis for determining which is the most useful image, i.e., the priority image, for the contouring to continue manually. This essentially allows the method 300 to provide a priority image to a user without any input from the user at first, so that they may start the contouring with the priority image. For example, this method 300 may occur in the background while a user is looking at one of the respective medical images or beginning to contour on one. For instance, the method 300 may determine a priority image without any input from the user but allow the user to start contouring on whatever image they choose, only later informing them of the fact that the priority image is a different image to that which they are currently viewing.

In step 325, corresponding boundary data is generated for each of the remaining plurality of medical images describing corresponding regions in each of the remaining plurality of medical images respectively. This facilitates the generation of boundary data customized to each medical image, so that the comparing of visual characteristic values may be made more efficient, effective, accurate and/or reliable. For instance, if the plurality of medical images are not exactly aligned, the boundary data for each image may be adjusted so that they are aligned across the medical images. In other words, if a drawn boundary line is in different locations across the different medical images, relative to the anatomical region, the boundary data may adjusted to shift the boundary in each image to ensure that the boundary is, for example, at the edge of a tumour in each image. Essentially, if the boundary data is only describing a region of one medical image, for instance, and this image was captured to the left of where the remaining medical images were captured, then corresponding boundary data can be generated for the remaining images in which, for example, the region is shifted to the left so that, with respect to the anatomy within the images, the regions are now matching across the medical images. In other words, the corresponding boundary data is generated so that in each medical image, the locations of the regions match with respect to the anatomical region within the images.

In other words, step 235 may be understood as a form of re-slicing and/or co-registration with respect to boundary data of each medical image.

In step 330, each of the plurality of medical images are processed based on their corresponding boundary data respectively to generate at least one visual characteristic value for each respective medical image. In this embodiment, a dynamic range value and a contrast value between pixels on either side of the closed boundary in each respective medical image is generated.

In step 340, a priority image is determined based on the dynamic range and contrast values for each respective medical image. For instance, in this embodiment the dynamic range and contrast values are input into an algorithm configured for determining a priority image based on these visual characteristic values. In other embodiments, a machine-learning algorithm could be used. In other embodiments, any suitable method for determining a priority image based on the visual characteristic values of each medical image may be used.

In step 350, a signal is generated for informing a user that the priority image is a different image to a medical image the user is currently viewing. In step 355, the generated signal is outputted. This facilitates the user being informed that they are not looking at the image which has been deemed the most optimal for anatomical contouring. For example, in this embodiment, the signal comprises a pop-up window comprising text that informs the user that the priority image is a different image to the image that the user is currently viewing. In other embodiments, however, the pop-up window may comprise the priority image - in these embodiments, the contour line may appear in the pop-up window so that a user can continue contouring with their initial image while still having access to what the same contour line would look like on the priority image.

In other embodiments, the generated signal may comprise a signal configured to make an input device vibrate. This allows a user to be informed that they are not looking at the priority image without interrupting the visuals that they are currently looking at and/or interacting with. The input device may, for example, be a smart pen, smart brush, or mouse which includes an electromechanical vibration system to enable vibration.

In step 360, in response to receiving an acceptance signal from a user, the priority image is output on at least one display device. This allows the user to easily switch to the priority image. For example, if the user is informed of the priority image through a pop-up window, the acceptance signal may be to click on the window. The priority image can then be made full screen, for instance, to allow the user to continue contouring. If the user was informed through a vibrating input device, the acceptance signal could be, for example, to click a certain button on the input device, such a small side button on a smart pen or brush. In other embodiments, in which the user is using a smart pen or brush, the acceptance signal could be a small forward nudge of the smart pen/brush. A backwards nudge of the pen/brush may then be a rejection signal, indicating they do not want to view the priority image and want to stay viewing their current image.

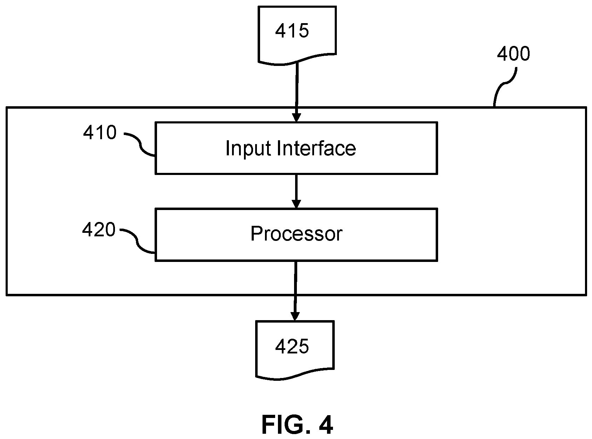

Referring now to Fig. 4, there is depicted a system 400 for prioritizing medical images for anatomical contouring according to a proposed embodiment. The system 400 comprises an input interface 410 and a processor 420.

The system 400 is configured to determine a priority image by processing inputs 415. The inputs 415 comprise plurality of medical images including the same anatomical region, each medical image being captured using a different imaging modality or imaging sequence; and boundary data describing a region of at least one of the plurality of medical images. The input interface 410 obtains the inputs 415 and the processor 420 is then configured to process each of the plurality of medical images based on the boundary data to generate at least one visual characteristic value for each respective medical image. Based on generated plurality of visual characteristic values, the processor 420 can then determine an output 425. The output 425 comprises a priority image of the plurality of medical images.

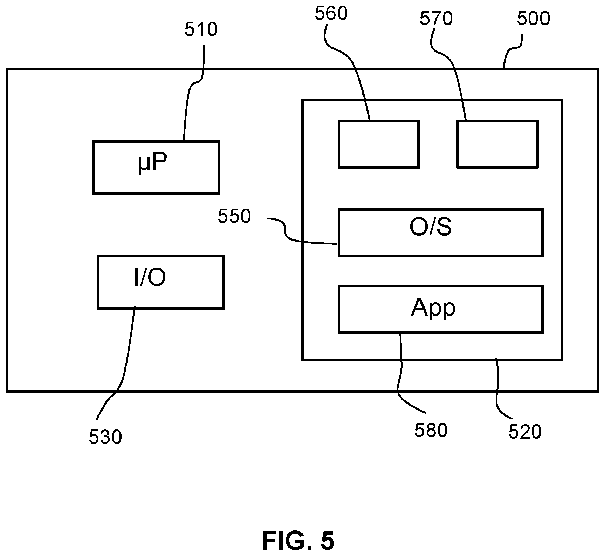

Fig. 5 illustrates an example of a computer 500 within which one or more parts of an embodiment may be employed. Various operations discussed above may utilize the capabilities of the computer 500. In this regard, it is to be understood that system functional blocks can run on a single computer or may be distributed over several computers and locations (e.g. connected via internet).

The computer 500 includes, but is not limited to, PCs, workstations, laptops, PDAs, palm devices, servers, storages, and the like. Generally, in terms of hardware architecture, the computer 500 may include one or more processors 510, memory 520 and one or more I/O devices 530 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 560, source code 570, and one or more applications 580 in accordance with exemplary embodiments. As illustrated, the application 580 comprises numerous functional components for implementing the features and operations of the exemplary embodiments. The application 580 of the computer 500 may represent various applications, computational units, logic, functional units, processes, operations, virtual entities, and/or modules in accordance with exemplary embodiments, but the application 580 is not meant to be a limitation.

The operating system 550 controls the execution of other computer programs, and provides scheduling, input-output control, file and data management, memory management, and communication control and related services. It is contemplated by the inventors that the application 580 for implementing exemplary embodiments may be applicable on all commercially available operating systems.

Application 580 may be a source program, executable program (object code), script, or any other entity comprising a set of instructions to be performed. When a source program, then the program is usually translated via a compiler (such as the compiler 560), assembler, interpreter, or the like, which may or may not be included within the memory 520, so as to operate properly in connection with the O/S 550. Furthermore, the application 580 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 530 may include input devices such as, for example but not limited to, a mouse, keyboard, scanner, microphone, camera, etc. Furthermore, the I/O devices 530 may also include output devices, for example but not limited to a printer, display, etc. Finally, the I/O devices 530 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 530 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at start-up, start the O/S 550, and support the transfer of data among the hardware devices. The BIOS is stored in some type of read-only-memory, such as ROM, PROM, EPROM, EEPROM or the like, so that the BIOS can be executed when the computer 500 is activated.

When the computer 500 is in operation, the processor 510 is configured to execute software stored within the memory 520, to communicate data to and from the memory 520, and to generally control operations of the computer 500 pursuant to the software. The application 580 and the O/S 550 are read, in whole or in part, by the processor 510, perhaps buffered within the processor 510, and then executed.

When the application 580 is implemented in software it should be noted that the application 580 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 580 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1 and 3, and the system of Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method (100) for prioritizing medical images for anatomical contouring, the method comprising:
obtaining a plurality of medical images (110) including the same anatomical region, each medical image being captured using a different imaging modality or imaging sequence;
obtaining boundary data (120) describing a region of at least one of the plurality of medical images;
processing each of the plurality of medical images (130) based on the boundary data to generate at least one visual characteristic value for each respective medical image; and
determining a priority image (140) of the plurality of medical image based on the generated plurality of visual characteristic values.

2. The method of claim 1, wherein a visual characteristic comprises at least one of: contrast; sharpness; tone; gamma; texture; dynamic range; colour; saturation; and white balance.

3. The method of any of claims 1 or 2, wherein an imaging modality or imaging sequence comprises at least one of: conventional CT imaging; spectral CT imaging; monoenergetic CT imaging; iodine density imaging; Z-Effective imaging; x-ray imaging; MRI imaging; multi-parametric MRI imaging; and PSMA PET/CT imaging.

4. The method of any prior claim, wherein obtaining boundary data comprises:
analyzing at least one of the plurality of medical images (320) to generate boundary data describing a region for the at least one image respectively.

5. The method of any prior claim, wherein the region describes a boundary.

6. The method of claim 5, wherein the boundary comprises a boundary generated by a user.

7. The method of claim 5 or 6, wherein the visual characteristic value comprises a contrast value between pixels on either side of the boundary.

8. The method of any of claims 5 to 7, wherein the boundary comprises an open boundary.

9. The method of any prior claim, wherein processing each of the plurality of medical images comprises:
generating corresponding boundary data (325) for each of the remaining plurality of medical images describing corresponding regions in each of the remaining plurality of medical images respectively; and
processing each of the plurality of medical images (330) based on their corresponding boundary data respectively to generate at least one visual characteristic value for each respective medical image.

10. The method of any prior claim, wherein the method further comprises generating a signal (350) for informing a user that the priority image is a different image to a medical image the user is currently viewing; and, preferably, outputting the generated signal (355).

11. The method of claim 10, wherein the generated signal comprises a signal configured to make an input device vibrate.

12. The method of any prior claim, wherein the method further comprises: in response to receiving an acceptance signal from a user, outputting the priority image (360) on at least one display device.

13. The method of any prior claim, wherein the method further comprises outputting the priority image (360) on at least one display device.

14. A computer program comprising code means for implementing the method of any preceding claim when said program is run on a processing system.

15. A system (400) for prioritizing medical images for anatomical contouring, the system comprising:
an input interface (410) configured to:
obtain a plurality of medical images (110) including the same anatomical region, each medical image being captured using a different imaging modality or imaging sequence; and
obtain boundary data (120) describing a region of at least one of the plurality of medical images; and
a processor arrangement (420) configured to:
process each of the plurality of medical images (130) based on the boundary data to generate at least one visual characteristic value for each respective medical image; and
determine a priority image (140) of the plurality of medical images based on the generated plurality of visual characteristic values.
